# FASCICULE DE BREVET EUROPEEN

(11) **EP 1 508 510 B1**
(45) Date de publication et mention de la délivrance du brevet: **20.12.2006**
(21) Numéro de dépôt: 04291983.7
(22) Date de dépôt: 03.08.2004
(51) Int. Cl.: B62D 35/02

(54) **Dispositif de réduction de la traînée et de la portance d'un véhicule automobile et véhicule automobile équipé d'un tel dispositif**
Vorrichtung zur Widerstands- und Antriebsverminderung bei Kraftfahrzeugen und mit so einer Vorrichtung ausgestattetes Fahrzeug
Device for reducing the drag and the lift of motor vehicles and vehicle comprising such device

(30) Priorité: 13.08.2003 FR 0309927
(43) Date de publication de la demande: 23.02.2005
(73) Titulaire: Peugeot Citroën Automobiles S.A., 78140 Vélizy Villacoublay (FR)
(72) Inventeur: Aider, Jean-Luc, 75014 Paris (FR); Lasserre, Jean-Jacques, 92330 Chatillon (FR)
(74) Mandataire: Lanceplaine, Jean-Claude

(56) Documents cités:
- DE-A- 19 614 083
- DE-A- 19 836 971

## Description

La présente invention concerne un véhicule automobile équipé d'un dispositif de réduction de la traînée et de la portance.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Si effectivement les plus grosses dépressions et les principales structures tourbillonnaires et les décollements sont générés sur la partie arrière du véhicule automobile, la région des roues et des passages de roues est également une zone critique. En effet, l'écoulement de l'air s'engouffre dans le passage de roues et on observe très souvent un décollement en aval de celui-ci.

On observe également toujours un sillage important derrière les roues du véhicule et le sillage des roues avant rencontre les roues arrière et modifie leur sillage. Le sillage des roues et l'écoulement de l'air dans les passages de roues agissent aussi directement sur l'écoulement de l'air au niveau du soubassement du véhicule, modifiant ainsi le débit de l'air sortant de dessous du véhicule et par-là même modifient la structure de l'écoulement de l'air sur l'arrière du véhicule automobile.

Le document DE 10213188 A1 décrit un vehicule automobile équipé en amont d'un passage de roue, une écope comportant une entrée dirigée vers l'avant du vehicule, ladite écope étant ménagée dans ledit passage de roue, derrière la roue avant.

Ainsi, la région des roues et des passages de roues est une région très sensible pour l'aérodynamique du véhicule et les constructeurs estiment que ces régions contribuent en moyenne à 15% de la valeur de coefficient de pénétration dans l'air du véhicule automobile.

L'invention a pour but de proposer un véhicule automobile équipé d'un dispositif de réduction de la traînée et de la portance qui permet de modifier la structure de l'écoulement de l'air au niveau des roues arrière et des passages de roues arrière et qui permet non seulement de diminuer la portance arrière et donc d'améliorer la stabilité, mais aussi de favoriser une diminution de la traînée du véhicule et donc la consommation de ce dernier.

L'invention a donc pour objet un véhicule automobile, du type comprenant un dispositif de réduction de la traînée et de la portance, caractérisé en ce qu'il comprend en amont d'un passage de roue d'au moins une roue arrière du véhicule, une écope disposée au-dessous du soubassement du véhicule et comportant une entrée d'air dirigée vers l'avant de ce véhicule, ladite écope étant reliée par un conduit à au moins une fente ménagée dans ledit passage de roue devant la roue arrière pour créer un rideau d'air vertical empêchant l'écoulement extérieur de s'engouffrer dans ce passage de roue.

Selon d'autres caractéristiques de l'invention :
- l'écope est fixe au-dessous du soubassement du véhicule,
- l'écope est déplaçable entre une position escamotée intégrée au soubassement du véhicule et une position déployée fixe dépassant au-dessous dudit soubassement, le déplacement de cette écope entre ces positions étant actionné par au moins un organe de commande en fonction d'informations fournies par au moins un capteur d'assiette du véhicule et/ou de pression et/ou de vitesse et/ou de frottement implanté sur la carrosserie du véhicule,
- l'écope est déplaçable entre une position escamotée intégrée au soubassement du véhicule et une position déployée dépassant au-dessous dudit
soubassement, la hauteur du dépassement de l'écope étant variable et pilotée par au moins un organe de commande en fonction d'informations fournies par au moins un capteur d'assiette du véhicule et/ou de pression et/ou de vitesse et/ou de frottement implanté sur la carrosserie du véhicule,
- la section de l'entrée d'air de l'écope dans sa position déployée est pilotée pour contrôler le débit d'air en fonction d'informations fournies par au moins un capteur de vitesse et/ou de pression et/ou de frottement,
- le rapport entre la section de l'entrée d'air de l'écope et la section de ladite fente est compris entre 0,1 et 3,
- le fond de l'écope présente un profil longitudinal arrondi,
- l'écope a une longueur comprise entre 10 et 60 cm,
- ladite fente de sortie d'air est fixe et la direction du rideau d'air est constante,
- ladite fente de sortie d'air est mobile pour piloter la direction du rideau d'air en fonction d'informations fournies par au moins un capteur d'assiette du véhicule et/ou de pression et/ou de frottement et/ou de vitesse implanté sur la carrosserie du véhicule,
- ladite fente est disposée sur le bord extérieur du passage de roue,
- ladite fente s'étend sensiblement du bord inférieur du passage de roue jusqu'au sommet dudit passage de roue,
- le conduit se rétrécit de l'entrée vers la fente et converge vers ladite fente:

L'invention sera mieux comprise à la lecture de la description qui va suivre, donnée à titre d'exemple et faite en se référant aux dessins annexés, sur lesquels :
- la Fig. 1 est une vue schématique de dessous d'un véhicule automobile équipé d'au moins un dispositif de réduction de la traînée et de la portance conforme à l'invention :
- la Fig. 2 est une vue schématique de côté de la partie arrière du véhicule automobile équipée du dispositif conforme à l'invention,
- la Fig. 3 est une vue schématique en perspective du passage de roue arrière équipé du dispositif conforme à l'invention.

Les véhicules automobiles, lorsqu'ils roulent, sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

Ainsi, une carrosserie 2 d'un véhicule automobile 1 comporte une partie arrière formée par des éléments de carrosserie générant des zones de dépression où ces phénomènes sont particulièrement importants.

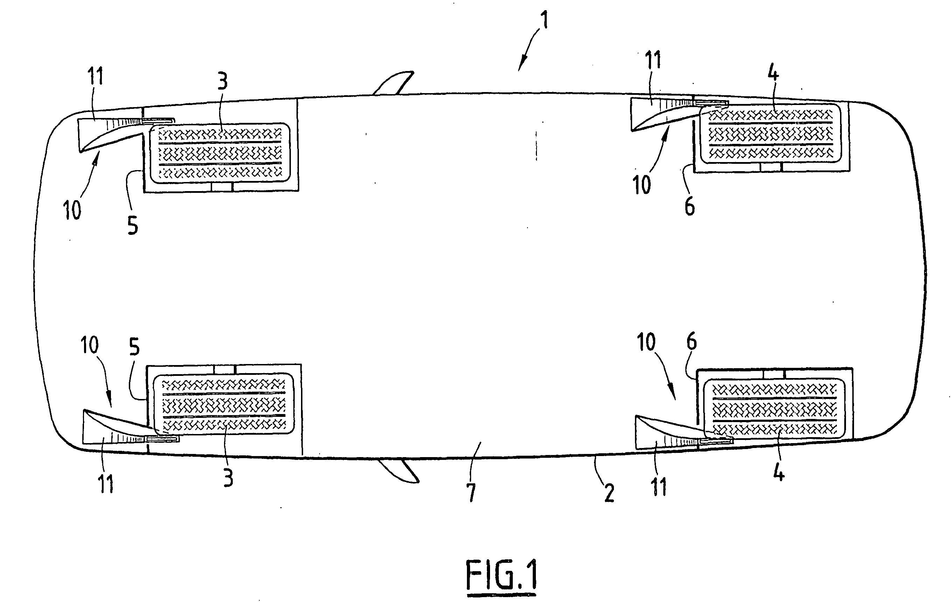

Mais, les roues avant 3 et les roues arrière 4 ainsi que les passages de roues avant 5 et les passages de roues arrière 6, comme montré à la Fig. 1, sont des régions également critiques où ces phénomènes de dépression se produisent aussi.

Chaque roue génère un sillage important et c'est ce sillage qui est responsable de la traînée individuelle de chacune des roues.

En effet, l'écoulement de l'air s'engouffre dans les passages de roues 5 et 6 et il se produit très souvent un décollement en aval de ceux-ci. Les roues 3 et 4 génèrent également un sillage important derrière celles-ci si bien que le sillage des roues avant 3 rencontre les roues arrière 4 et modifie leur sillage. Ainsi, le sillage des roues 3 et 4 de l'écoulement de l'air dans les passages de roues 5 et 6 agissent aussi directement sur l'écoulement de l'air sur le soubassement 7 du véhicule automobile modifiant ainsi le débit d'air sortant de dessous de ce véhicule et par-là même modifie la structure de l'écoulement de l'air à l'arrière du véhicule automobile.

Ainsi que représenté sur les figures, le véhicule automobile 1 est équipé, au niveau des passages de roues 5 des roues avant 3 et/ou des passages de roues 6 des roues arrière 4, d'un dispositif 10 de réduction de la traînée et de la portance dudit véhicule automobile.

Chaque dispositif 10 est formé par une écope 11 disposée au-dessous du soubassement 7 du véhicule et en amont du passage de roue 5 de la roue avant 3 correspondante et/ou du passage de roue 6 de la roue arrière 4 correspondante. Cette écope 11 comporte une entrée 12 dirigée vers l'avant du véhicule et de préférence qui s'étend perpendiculairement à l'axe longitudinal de ce véhicule automobile.

Dans ce qui suit, la description sera faite pour une écope 11 placée devant une roue arrière 3, l'écope 11 placée devant une roue avant 3 étant identique.

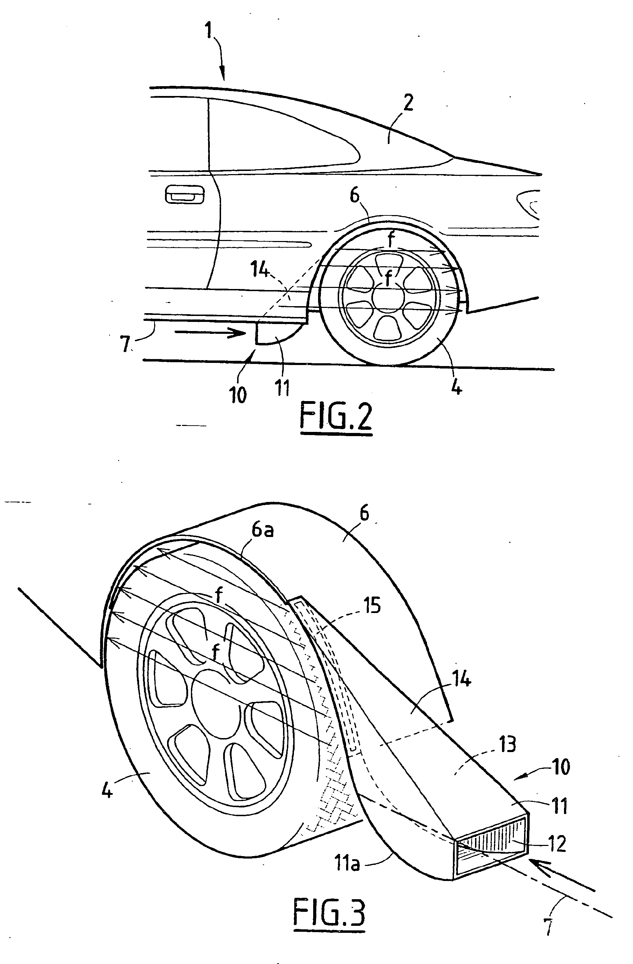

Ainsi que montré plus particulièrement sur les Figs. 2 et 3, l'écope 11 comporte à sa partie supérieure une ouverture 13 qui est reliée par un conduit 14 à au moins une fente 15 ménagée dans le passage de roue 6.

De préférence, le fond 11a de l'écope 11 présente un profil longitudinal arrondi et cette écope 11 a une longueur comprise entre 10 et 60 cm.

La fente 15 est de préférence disposée sur le bord extérieur 6a du passage de roue 6, ainsi que représenté à la Fig. 3 et cette fente 15 s'étend sensiblement du bord inférieur de ce passage de roue jusqu'au sommet dudit passage de roue 6.

Selon une variante, plusieurs fentes 15 peuvent être disposées les unes parallèlement aux autres et qui sont reliées à l'entrée 12 de l'écope 11 par le conduit 14. Ce conduit 14 se rétrécie de l'entrée 12 vers la fente 15 et converge vers ladite fente 15n ainsi que montré à la Fig. 1.

L'écope 11 placée devant chaque roue arrière 4 permet de récupérer de l'air là où la pression est importante ce qui permet d'obtenir un débit important lorsque le véhicule roule à haute vitesse. Ce flux d'air est dirigé vers le passage de roue 6 correspondant à l'aide du conduit 14 et ce flux d'air ressort par la fente 15 ménagée dans le passage de roue 6 de façon à former un rideau d'air vertical représenté sur les Figs. 2 et 3 par les flèches "f".

Ce flux d'air "f" protège la roue arrière 4 de l'impact de l'air incident permettant ainsi de créer une bavette fluide, c'est à dire une protection fluide devant la roue arrière 4 et un carénage fluide, c'est à dire une protection fluide du passage de roue 6.

La création de ce carénage fluide a pour but d'empêcher l'air circulant autour du véhicule de s'engouffrer dans le passage de roue 6 correspondant et d'éviter ainsi la création d'importantes zones de recirculation et d'écoulement complexes pénalisant pour la traînée et la portance du véhicule.

De plus, la présence de l'écope 11 devant la roue arrière 5 permet de protéger cette roue de l'impact de l'air incident et donc de réduire les régions de décollement autour de l'avant de cette roue arrière 4.

De préférence, le rapport entre la section Ae de l'entrée 12 de l'écope 11 et la section As de la fente 15 est compris entre 0,1 et 3.

De ce fait, la vitesse du flux d'air ainsi créée est inférieure ou égale à la vitesse de l'air autour du véhicule ce qui assure une bonne efficacité de ce dispositif.

Selon un premier mode de réalisation, l'écope 11 est fixe au-dessous du soubassement 7 du véhicule.

Selon un deuxième mode de réalisation, l'écope 11 est déplaçable entre une position escamotée intégrée au soubassement 7 et une position déployée fixe dépassant au-dessous de ce soubassement 7.

Le déplacement de l'écope 11 entre ces deux positions est actionné par au moins un organe de commande de type classique, non représenté, en fonction d'informations fournies par au moins un capteur, non représenté, d'assiette du véhicule et/ou de pression et/ou de vitesse et/ou de frottement implanté sur la carrosserie du véhicule automobile.

Selon un troisième mode de réalisation, la hauteur de dépassement de l'écope 11 dans sa position déployée au-dessous du soubassement 7 est variable et pilotée par au moins un organe de commande de type classique, non représenté, en fonction d'informations fournies par au moins un capteur, non représenté, d'assiette du véhicule et/ou de pression et/ou de vitesse et/ou de frottement implanté sur la carrosserie de ce véhicule automobile.

Selon une autre variante, la fente 15 de sortie d'air est fixe et la direction du rideau d'air est constante quelles que soient les conditions extérieures, comme par exemple la vitesse du véhicule automobile.

Selon encore une autre variante, la fente 15 de sortie d'air est mobile ce qui permet de piloter la direction du rideau d'air en fonction des conditions extérieures. A titre d'exemple, la direction de ce rideau d'air peut être pilotée par des moyens appropriés de type classique, par exemple par un capteur, non représenté, d'assiette et/ou de pression et/ou de frottement et/ou de vitesse.

Le dispositif de réduction de la traînée et de la portance s'applique à un véhicule automobile qu'il soit monospace, bi-corps ou tri-corps et permet donc de réduire la traînée et la portance de ce véhicule et, de ce fait, de diminuer la consommation d'énergie et d'augmenter la stabilité dudit véhicule.

## Revendications

1. Véhicule automobile, du type comprenant un dispositif de réduction de la traînée et de la portance, **caractérisé en ce que** le dispositif comprend en amont d'un passage de roue (6) d'au moins une roue arrière (4) du véhicule, une écope (11) disposée au-dessous du soubassement (7) et comportant une entrée (12) dirigée vers l'avant du véhicule, ladite écope (11) étant reliée par un conduit (14) à au moins une fente (15) ménagée dans ledit passage de roue (6) devant la roue arrière (4) pour créer un rideau d'air vertical empêchant l'écoulement extérieur de s'engouffrer dans ce passage de roue (6).

2. Véhicule selon la revendication 1, **caractérisé en ce que** l'écope (11) est fixe au-dessous du soubassement (7) du véhicule.

3. Véhicule selon la revendication 1, **caractérisé en ce que** l'écope (11) est déplaçable entre une position escamotée intégrée au soubassement (7) du véhicule et une position déployée fixe dépassant au-dessous dudit soubassement (7), le déplacement de cette écope (11) entre ces positions étant actionné par au moins un organe de commande en fonction d'informations fournies par au moins un capteur d'assiette du véhicule et/ou de pression et/ou de vitesse et/ou de frottement implanté sur la carrosserie (2) du véhicule automobile.

4. Véhicule selon la revendication 1, **caractérisé en ce que** l'écope (11) est déplaçable entre une position escamotée intégrée au soubassement (7) du véhicule et une position déployée dépassant au-dessous dudit soubassement (7), la hauteur du dépassement de l'écope (11) étant variable et pilotée par au moins un organe de commande en fonction d'informations fournies par au moins un capteur d'assiette du véhicule et/ou de pression et/ou de frottement implanté sur la carrosserie (2) du véhicule.

5. Véhicule selon l'une quelconque des revendications 1 à 4, **caractérisé en ce que** la section de l'entrée d'air (12) de l'écope (11) dans sa position déployée est pilotée pour contrôler le débit d'air en fonction d'informations fournies par au moins un capteur de vitesse et/ou de pression et/ou de frottement.

6. Véhicule selon l'une quelconque des revendications 1 à 5, **caractérisé en ce que** le rapport entre la section de l'entrée d'air (12) de l'écope (11) et la section de la fente (15) est compris entre 0,1 et 3.

7. Véhicule selon l'une quelconque des revendications 1 à 6, **caractérisé en ce que** le fond (11a) de l'écope (11) présente un profil longitudinal arrondi.

8. Véhicule selon l'une quelconque des revendications 1 à 7, **caractérisé en ce que** l'écope (11) a une longueur comprise entre 10 et 60 cm.

9. Véhicule selon l'une quelconque des revendications 1 à 8, **caractérisé en ce que** ladite fente (15) de sortie d'air est fixe et la direction du rideau d'air est constante.

10. Véhicule selon l'une quelconque des revendications 1 à 8, **caractérisé en ce que** ladite fente (15) de sortie d'air est mobile pour piloter la direction du rideau d'air en fonction d'informations fournies par au moins un capteur d'assiette du véhicule et/ou de pression et/ou de frottement et/ou de vitesse implanté sur la carrosserie du véhicule automobile.

11. Véhicule selon l'une quelconque des revendications 1 à 10, **caractérisé en ce que** ladite fente (15) est disposée sur le bord extérieur du passage de roue (6).

12. Véhicule selon l'une quelconque des revendications 1 à 11, **caractérisé en ce que** ladite fente (15) s'étend sensiblement du bord inférieur du passage de roue (6) jusqu'au sommet dudit passage de roue (6).

13. Véhicule selon l'une quelconque des revendications 1 à 12, **caractérisé en ce que** le conduit (14) se rétrécie de l'entrée (12) vers la fente (15) et converge vers ladite fente (15).

## Claims

1. Motor vehicle, of the type comprising a device for reduction of the drag and lift, **characterised in that** the device comprises upstream from a wheel passage (6) of at least one rear wheel (4) of the vehicle a scoop (11) which is disposed beneath the substructure (7) and comprises an intake (12) which faces towards the front of the vehicle, the said scoop (11) being connected by means of a duct (14) to at least one slot (15) which is provided in the said wheel passage (6) in front of the rear wheel (4) in order to create a vertical air screen which prevents the exterior flow from being engulfed in this wheel passage (6).

2. Vehicle according to claim 1, **characterised in that** the scoop (11) is secured beneath the vehicle substructure (7).

3. Vehicle according to claim 1, **characterised in that** the scoop (11) can be displaced between a retracted position in which it is integrated in the substructure (7) of the vehicle, and a fixed deployed position which extends beneath the said substructure (7), the displacement of this scoop (11) between these positions being activated by at least one control unit according to information supplied by at least one sensor for the stable position of the vehicle and/or pressure and/or speed and/or friction applied to the motor vehicle bodywork (2).

4. Vehicle according to claim 1, **characterised in that** the scoop (11) can be displaced between a retracted position in which it is integrated in the substructure (7) of the vehicle, and a deployed position which extends beneath the said substructure (7), the height of the extension of the scoop (11) being variable and controlled by at least one control unit, according to information supplied by at least one sensor for the stable position of the vehicle and/or pressure and/or friction applied to the motor vehicle bodywork (2).

5. Vehicle according to any one of claims 1 to 4, **characterised in that** the cross-section of the air intake (12) of the scoop (11) in its deployed position is controlled in order to control the air flow according to information supplied by at least one sensor for the speed and/or pressure and/or friction.

6. Vehicle according to any one of claims 1 to 5, **characterised in that** the ratio between the cross-section of the air intake (12) of the scoop (11) and the cross-section of the slot (15) is between 0.1 and 3.

7. Vehicle according to any one of claims 1 to 6, **characterised in that** the base (11a) of the scoop (11) has a rounded longitudinal profile.

8. Vehicle according to any one of claims 1 to 7, **characterised in that** the scoop (11) has a length of between 10 and 60 cm.

9. Vehicle according to any one of claims 1 to 8, **characterised in that** the said air outlet slot (15) is fixed and the direction of the air screen is constant.

10. Vehicle according to any one of claims 1 to 8, **characterised in that** the said air outlet slot (15) is mobile in order to control the direction of the air screen according to information supplied by at least one sensor for the stable position of the vehicle and/or pressure and/or friction and/or speed applied to the motor vehicle bodywork.

11. Vehicle according to any one of claims 1 to 10, **characterised in that** the said slot (15) is disposed on the outer edge of the wheel passage (6).

12. Vehicle according to any one of claims 1 to 11, **characterised in that** the said slot (15) extends substantially from the lower edge of the wheel passage (6) as far as the top of the said wheel passage (6).

13. Vehicle according to any one of claims 1 to 12, **characterised in that** the duct (14) narrows from the intake (12) towards the slot (15) and converges towards the said slot (15).

## Patentansprüche

1. Kraftfahrzeug, von dem Typ, der eine Vorrichtung zur Verringerung des Luftwiderstands und des Auftriebs umfasst, **dadurch gekennzeichnet, dass** die Vorrichtung oberhalb eines Raddurchgangs (6) wenigstens eines Hinterrades (4) des Fahrzeugs einen Flügel (11) umfasst, der unterhalb des Unterbaus (7) angeordnet ist und eine zur Vorderseite des Fahrzeugs gerichtete Einlassöffnung (12) aufweist, wobei der Flügel (11) über einen Kanal (14) mit wenigstens einem, in dem Raddurchgang (6) vor dem Hinterrad (4) ausgesparten Schlitz (15) verbunden ist, um einen vertikalen Luftvorhang zu schaffen, der verhindert, dass die Außenströmung sich in diesem Raddurchgang (6) verfängt.

2. Fahrzeug nach Anspruch 1, **dadurch gekennzeichnet, dass** der Flügel (11) unterhalb des Unterbaus (7) des Fahrzeugs unbeweglich ist.

3. Fahrzeug nach Anspruch 1, **dadurch gekennzeichnet, dass** der Flügel (11) zwischen einer eingefahrenen, in den Unterbau (7) des Fahrzeugs integrierten Stellung und einer ausgefahrenen, unbeweglichen Stellung, welche unterhalb des Unterbaus (7) vorsteht, verschiebbar ist, wobei die Verschiebung des Flügels (11) zwischen diesen Stellungen durch wenigstens ein Steuerelement in Abhängigkeit von Informationen, die von wenigstens einem in die Karosserie (2) des Kraftfahrzeugs eingesetzten Fahrzeuglage- und/oder Druck- und oder Geschwindigkeits- und/oder Reibungssensor geliefert werden, angetrieben wird.

4. Fahrzeug nach Anspruch 1, **dadurch gekennzeichnet, dass** der Flügel (11) zwischen einer eingefahrenen, in den Unterbau (7) des Fahrzeugs integrierten Stellung und einer ausgefahrenen Stellung, welche unterhalb des Unterbaus (7) vorsteht, verstellbar ist, wobei die Höhe des Überstands des Flügels (11) variabel ist und durch wenigstens ein Steuerorgan in Abhängigkeit von Informationen, die von wenigstens einem in die Karosserie (2) des Kraftfahrzeugs eingesetzten Fahrzeuglage- und/oder Druck- und oder Reibungssensor geliefert werden, gesteuert wird.

5. Fahrzeug nach einem der Ansprüche 1 bis 4, **dadurch gekennzeichnet, dass** der Querschnitt der Lufteinlassöffnung (12) des Flügels (11) in ihrer ausgefahrenen Stellung gesteuert wird, um die Luftmenge in Abhängigkeit von Informationen, die von wenigstens einem Geschwindigkeits- und/oder Druck- und/oder Reibungssensor geliefert werden, zu regeln.

6. Fahrzeug nach einem der Ansprüche 1 bis 5, **dadurch gekennzeichnet, dass** das Verhältnis zwischen dem Querschnitt der Lufteinlassöffnung (12) des Flügels (11) und dem Querschnitt des Schlitzes (15) zwischen 0,1 und 3 beträgt.

7. Fahrzeug nach einem der Ansprüche 1 bis 6, **dadurch gekennzeichnet, dass** der Boden (11a) des Flügels (11) ein abgerundetes Längsprofil aufweist.

8. Fahrzeug nach einem der Ansprüche 1 bis 7, **dadurch gekennzeichnet, dass** der Flügel (11) eine Länge zwischen 10 und 60 cm aufweist.

9. Fahrzeug nach einem der Ansprüche 1 bis 8, **dadurch gekennzeichnet, dass** der Schlitz (15) für den Luftaustritt unbeweglich ist und die Richtung des Luftvorhangs konstant ist.

10. Fahrzeug nach einem der Ansprüche 1 bis 8, **dadurch gekennzeichnet, dass** der Schlitz (15) für den Luftaustritt beweglich ist, um die Richtung des Luftvorhangs in Abhängigkeit von Informationen, die von wenigstens einem in die Karosserie des Kraftfahrzeugs eingesetzten Fahrzeuglage- und/oder Druck- und oder Reibungs- und/oder Geschwindigkeitssensor geliefert werden, zu steuern.

11. Fahrzeug nach einem der Ansprüche 1 bis 10, **dadurch gekennzeichnet, dass** der Schlitz (15) auf dem äußeren Rand des Raddurchgangs (6) angeordnet ist.

12. Fahrzeug nach einem der Ansprüche 1 bis 11, **dadurch gekennzeichnet, dass** der Schlitz (15) sich im Wesentlichen vom unteren Rand des Raddurchgangs (6) bis zum Scheitel des Raddurchgangs (6) erstreckt.

13. Fahrzeug nach einem der Ansprüche 1 bis 12, **dadurch gekennzeichnet, dass** der Kanal (14) sich von der Einlassöffnung (12) zu dem Schlitz (15) verengt und zu dem Schlitz (15) hin konvergiert.
